# EUROPEAN PATENT APPLICATION

(11) **EP 2 508 550 A1**
(43) Date of publication of application: **10.10.2012**
(21) Application number: 11190943.8
(22) Date of filing: 28.11.2011
(51) Int. Cl.: C08G 77/16, C08G 77/18

(54) **Novel silicon-containing contact lenses**

(30) Priority: 08.04.2011 TW 100112340
(71) Applicant: Rise Technology Co., Ltd, Apia (WS)
(72) Inventor: Huang, Kuo-Chun, Apia (WS); Cheng, Hsi-tsu, Apia (WS); Lin, Chien-Hong, Apia (WS); Yeh, Yi-Hsing, Apia (WS)
(74) Representative: Schwerbrock, Florian

(57) **Abstract**

Disclosed is a silicon-containing prepolymer, produced by the following hydrophobic and hydrophilic compounds, through hydrolysis-condensation-polymerization reactions: a tetraalkoxysilane as represented by formula (I), a hydroxyl-terminated polydimethylsiloxane as represented by formula (II), and a hydrophilic reactive monomer as represented by formula (III);

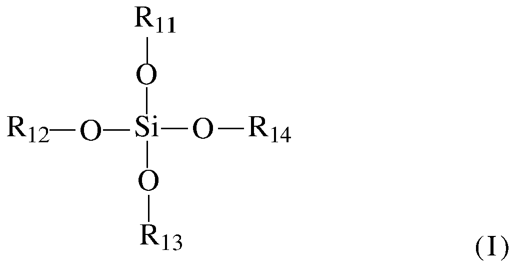

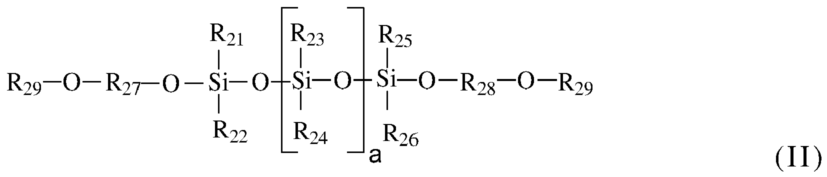

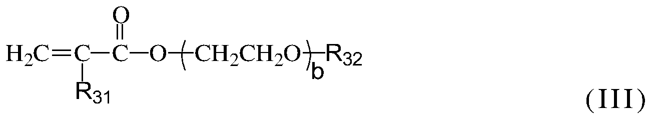

Silicon-containing prepolymer can be produced by hydrolysis-condensation-polymerization reactions, and present a 3-dimensional three-dimensional network structure and good mechanical strength. Silicone hydrogel contact lenses possessing features of high oxygen permeability, hydrophilicity and wearing comfort, thus can be produced.

## Description

### CROSS-REFERENCE TO RELATED APPLICATIONS

This Non-provisional application claims priority under 35 U.S.C. §119(a) on Patent Application No(s). [100112340] filed in Taiwan, Republic of China [April 08, 2011], the entire contents of which are hereby incorporated by reference.

### FIELD OF THE INVENTION

The present invention relates to a silicon-containing prepolymer, particularly, the silicon-containing prepolymer has a 3-dimensional network structure, the prepolymer possesses the interior silicon-containing chains and the exterior hydrophilic chains, so that the prepolymer can be applied for silicone hydrogel contact lenses.

### BACKGROUND OF THE INVENTION

Polymethyl methacrylate (PMMA), is the first plastic material for producing contact lens. PMMA has advantages such as good optical property, stability, low-toxicity, anti-coagulating, simple manufacture, ample resources, and low prices. However, hydrophilicity and oxygen permeability of PMMA are insufficient so that it becomes an obstacle used in the development of contact lenses.

The first pair of rigid gas permeable contact lenses were made of cellulose acetate butyrate (CAB). CAB is not a simple compound, its flexibility can be increased and hydrophilicity can be lowered by increasing butyryl groups for the material. Oxygen permeability of CAB is slightly better than PMMA. CAB is durable and simple for manufacture, however it is prone to deformation after absorption of water or external force distortion.

In further development of polymer for rigid contact lenses, fluoride-containing monomer is added into siloxane acrylate to obtain fluorosilicone acrylate (FSA). In comparison with siloxane acrylate, adding of fluoride-containing monomer raises oxygen permeability and improves its surface characteristics, therefore it has anti-coagulating characteristic against proteins and lipids. As to the present materials for rigid contact lenses, FSA and fluorosilicone have the highest oxygen permeability (except for silicone elastomers).

Poly(2-hydroxyethyl methacrylate)(PHEMA) is the first hydrogel material successfully applied for biomedical polymer in 1960, reported by Wichterle and Lim. Hydrogel is a polymer material which has a solid three-dimensional network structure, it also possesses a degree of flexibility but not solves in water. Among various hydrogel materials, Poly(hydroxyethyl-methacrylate (PHEMA) is undoubtedly a widely used biomaterial, particularly in contact lenses. However, PHEMA is limited for various uses due to its low equilibrium moisture content. Thus, researchers have developed copolymerized PHEMA hydrogels combined with hydrophilic monomers to improve the above defects.

Siloxanyl methacrylate (SMA) is formed by copolymerization of methacrylates and siloxanyl moieties. Methacrylates raise its strength, stability and optical property, and silicones raise its oxygen permeability. Many rigid gas permeable materials are developed for gas permeable contact lenses based on this principle.

As silicones having high oxygen permeability, they are applied for contact lenses. Generally silicone lenses are classified into silicone rubber lenses and organic silicone resin lenses. Silicone rubber is an elastomer, its tenacity and strength are between rigid and soft contact lenses. Organic silicone resin is a hydrophobic polymer, it has lower moisture content. Researchers try to overcome this defect in different ways, but the effect is limited. Due to the above reasons, silicone lenses are not significantly developed.

In order to elevate wearing comfort of hydrogel contact lenses, the industry continually researches and develops a material combined with hydrophilic materials and treated with surface modification by plasma, to increase its surface hydrophilicity and maintain highly oxygen permeable feature of hydrogel. However, above method has many defects such as high equipment cost and complex manufacturing. Particularly, during producing process, hydrophilic materials may unstably connect to hydrogel suface, thus the quality is inconsistent and may result in poor yield rate and increase production cost.

As described above, contact lenses require high oxygen permeability, wearing comfort and long-term wearing. Through continuous improvement, highly oxygen permeable soft contact lenses made by silicone or silicon hydrogel become the major products. Presently, only few companies such as Bausch & Lomb, CIBA Vision, Johnson & Johnson, and Cooper, are capable of producing silicon-containing hydrogel for contact lenses. Thus, it is still required to develop a silicon-containing prepolymer and silicon-containing hydrogel which are distinguished from the present contact lens materials, and both possess features of high oxygen permeability and wearing comfort.

To overcome the above defects, applicants constantly consider and try to improve the traditional designs, so as to reach the goals that contact lenses simultaneously possess features of high oxygen permeability and hydrophilicity to extend wearing time and elevate wearing comfort. Through frequent researches and experiments, an improved method is developed. The method of the present invention includes initially forming silicon-containing prepolymer as a major material for producing silicone hydrogel contact lenses. The major component of the prepolymer is highly oxygen permeable hydrophobic silicone having the terminal group which is a hydrophilic chain, so that the prepolymer possesses the interior silicon-containing chains and the exterior hydrophilic chains. In combination with hydrophilic biomedical materials, water retention and wearing comfort of contact lenses can be significantly elevated, and phase separation caused by incompatibility of hydrophilic and hydrophobic materials also can be solved.

### SUMMARY OF THE INVENTION

For HEMA soft contact lenses production, hydrophilic monomers are used for polymerization, thus high moisture content is the major feature of HEMA contact lenses. However, low oxygen permeability is the major defect, it causes dry eyes while long-term wearing so that the wearing time is limited. The silicone hydrogel contact lenses of the present invention, polymerizes the silicone monomers (hydrophobic monomer) and hydrophilic monomers to successfully produce silicone hydrogel contact lenses possessing features of high oxygen permeability and hydrophilicity to extend wearing time and elevate wearing comfort.

The primary object of the present invention is to develop silicone hydrogel contact lenses possessing features of high oxygen permeability, hydrophilicity and wearing comfort. The critical technologies include:

1. Due to that oil-water incompatibility induces phase separation and consequently causes lenses opaque, silicone hydrogel contact lenses reach oil-water compatibility and maintain the lenses transparent.

2. Hydrophilicity is also an obstacle for silicone hydrogel contact lenses. Since silicone hydrogel is a hydrophobic material having low moisture content and poor surface wettability, using hydrophilic monomers to modify silicone hydrogel may result in phase separation. Therefore, it is a difficult problem to harmonize hydrophilic and hydrophobic monomers and elevate silicone hydrogel's oxygen permeability, moisture content and surface wettability.

3. Silicon-containing prepolymer can be produced by simple hydrolysis-condensation-polymerization reactions, and present a 3-dimensional three-dimensional network structure and good mechanical strength. In addition, by linking hydrophobic and hydrophilic chain portion, so as to form interior silicone hydrophobic chains and exterior hydrophilic chains, and produce silicone hydrogel contact lenses having high oxygen permeability and hydrophilicity.

The silicon-containing prepolymer of the present invention is produced by the following hydrophobic and hydrophilic compounds, through hydrolysis-condensation-polymerization reactions: a tetraalkoxysilane as represented by formula (I), a hydroxyl-terminated polydimethylsiloxane as represented by formula (II), and a hydrophilic reactive monomer as represented by formula (III);

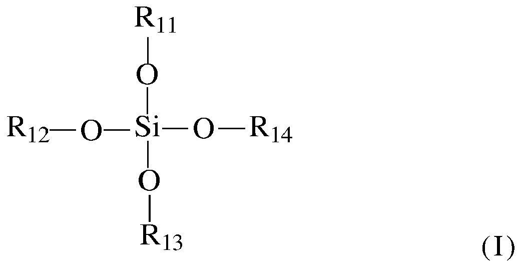

wherein each R11, R12, R13, and R14 is independently a C1∼C8 alkyl group;

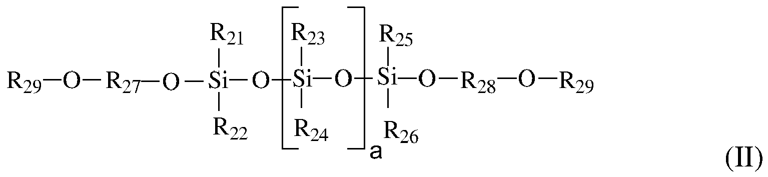

wherein each R21, R22, R23, R24, R25 and R26 is independently a C1∼C6 alkyl group; each R27 and R28 is independently a C1∼C4 alkyl group; R29 is a C1∼C4 alkyl group, or hydrogen; a is an integral between 1∼60;

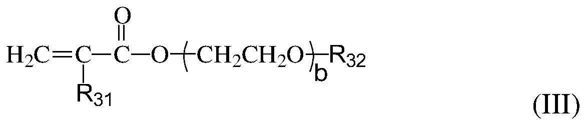

R31 is a C1∼C6 alkyl group; R32 is a C1∼C6 alkyl group, carboxyl group or hydrogen; b is an integral between 1∼30.

Silicon-containing prepolymer of the present invfention, is produced by simple hydrolysis-condensation-polymerization reactions to obtain a 3-dimensional three-dimensional network structure. Further, hydrophilic and hydrophobic monomers are copolymerized by performing free radical copolymerization to form a silicone hydrogel having excellent gas permeability, hydrophilicity, mechanical strength and wearing comfort, without low elongation and fragile problems. Additionally, above silicone hydrogel is suitable for producing contact lenses having the forgoing advantages.

### BRIEF DESCRIPTION OF THE DRAWINGS

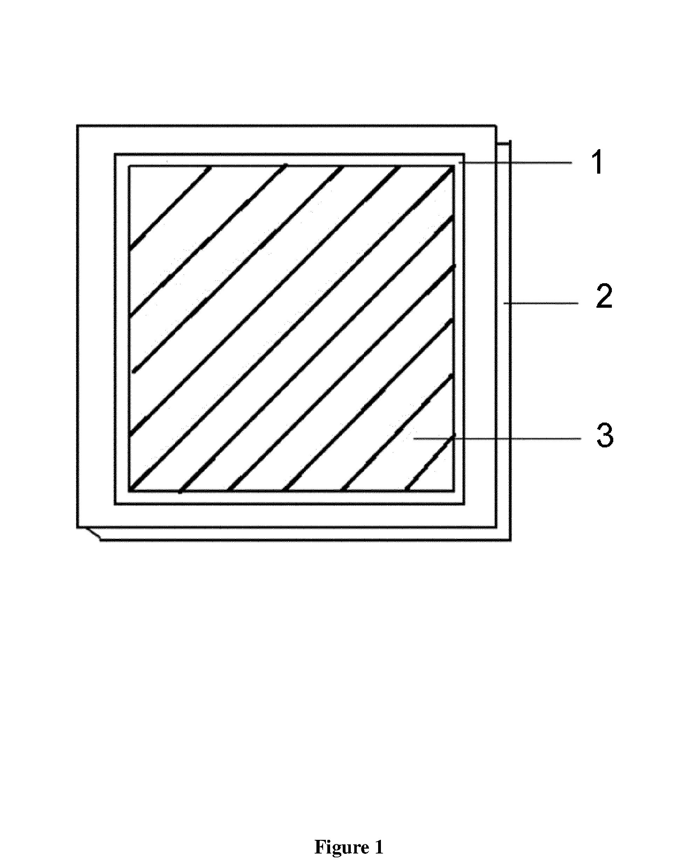

Figure 1 is a schematic view of the glass mold used in the present invention.

### DETAILED DESCRIPTION

Presently, few silicon-containing prepolymer are used for contact lenses production. Using silicon-containing prepolymer can significantly raise its gas permeability, however reduce its moisture content, surface wettability and mechanical property. Therefore, a novel silicon-containing prepolymer is developed. The prepolymer has a 3-dimensional structure, which is different from the straight chain prepolymer on the market. In addition, using different molar ratio of reactants to copolymerize silicone prepolymer can modify unsaturated functional groups thereof in a different level, therefore the silicone prepolymer has a better reactivity.

The silicon-containing prepolymer of the present invention is produced by the following hydrophobic and hydrophilic compounds, through hydrolysis-condensation-polymerization reactions: a tetraalkoxysilane as represented by formula (I), a hydroxyl-terminated polydimethylsiloxane as represented by formula (II), and a hydrophilic reactive monomer as represented by formula (III);

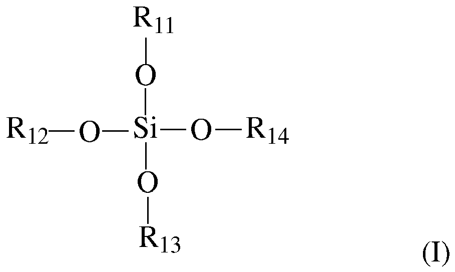

wherein each R₁₁, R₁₂, R₁₃, and R₁₄ is independently a C1∼C8 alkyl group;

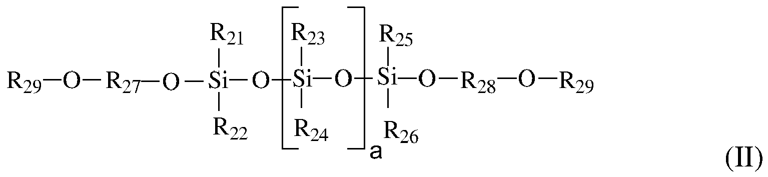

wherein each R21, R22, R23, R24, R25 and R26 is independently a C1∼C6 alkyl group; each R27 and R28 is independently a C1∼C4 alkyl group; R29 is a C1∼C4 alkyl group, or hydrogen; a is an integral between 1∼60;

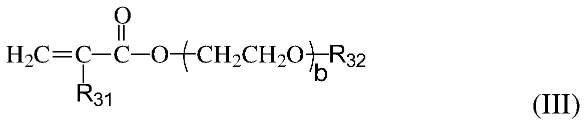

R31 is a C1∼C6 alkyl group; R32 is a C1∼C6 alkyl group, carboxyl group or hydrogen; b is an integral between 1∼30.

hydrolysis-condensation-polymerization reactions to form a silicon-containing prepolymer, and the principle of these reactions as follow:

1. Hydrolysis

Precursor Si(OR)4 is dissolved in acidic or basic solution, the alkoxy group reacts with hydroxyl group of (I) or (II), and the precursor becomes Si(OH)n(OR)4-n, which is called hydrolysis reaction. The reaction can be divided into two reactions depending on different catalyst. Electrophilic substitution reaction occurs under acidic catalyst, and nucleophilic substitution reaction occurs under basic catalyst, two reactions are described as follow:

(1) Electrophilic substitution reaction

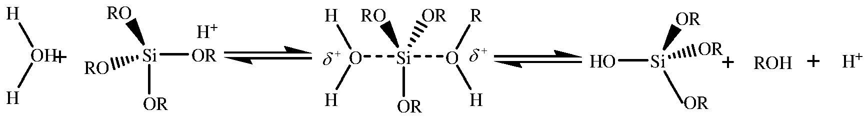

(2) Nucleophilic substitution reaction

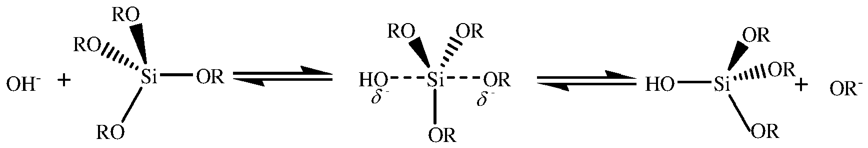

2. Condensation

two reactions including dehydration or dealcoholization are described as follow:

(1) Alcohol Condensation

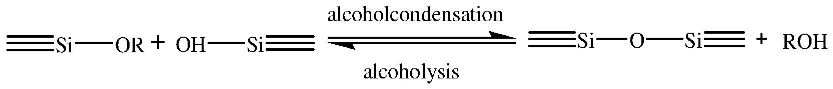

(2) Water Condensation

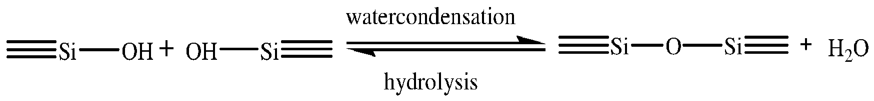

3. Polymerization

(1) Regarding polymerization, Iler suggests the following reaction mechanisms:

(1) polymerizing monomers to form particles;

(2) particles growing;

(3) particles gathering to form a network structure, and crosslinking particles to form gel.

Pre-hydrolysed Si(OH)n(OR)4-n copolymerize to form a 3-dimensional SiO2 network structure, the reaction is demonstrated as follow:

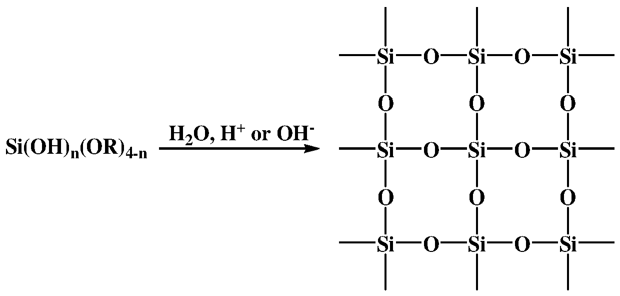

In the first step, tetraalkoxysilane (I) reacts with hydroxyl-terminated polydimethylsiloxane (II), in molar ratio of 1∼20: 1, to form an Si(OR)4 precursor (A).

Preferably, the molar ratio of tetraalkoxysilane (I) and hydroxyl-terminated polydimethylsiloxane (II) to Si(OR)4 precursor (A) is 2∼16 : 1.

Preferably, the molar ratio of tetraalkoxysilane (I) and hydroxyl-terminated polydimethylsiloxane (II) to Si(OR)4 precursor (A), is 4∼14 : 1.

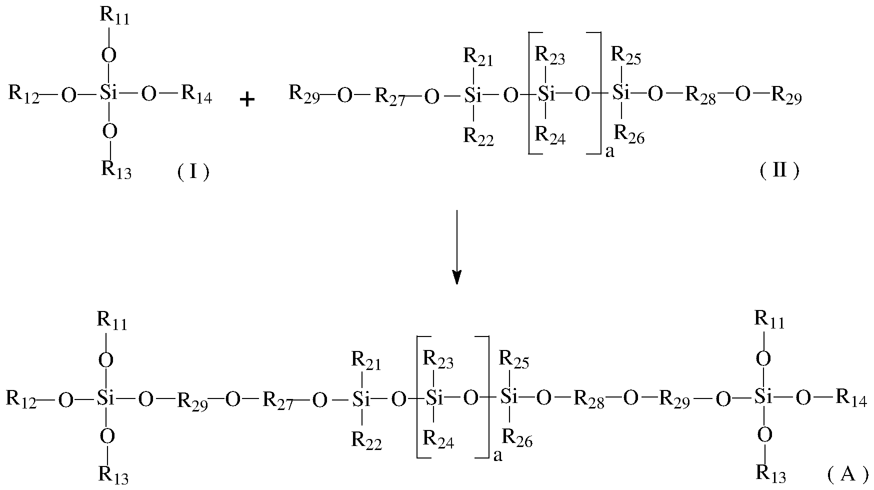

Each R11, R12, R13, and R14 is independently a C1∼C8 alkyl group; each R21, R22, R23, R24, R25 and R26 is independently a C1∼C6 alkyl group; each R27 and R28 is independently a C1∼C4 alkyl group; R29 is a C1∼C4 alkyl group, or hydrogen; a is an integral between 1~60.

Preferably, each R11, R12, R13, and R14 is independently a C1∼C6 alkyl group. Preferably, each R11, R12, R13, and R14 is independently a C1~C4 alkyl group, which is tetraethyl orthosilieate (TEOS) as a reactant in the example of the present invention.

Preferably, each R21, R22, R23, R24, R25 and R26 in formula (II) is independently a C1∼C5 alkyl group; each R27 and R28 is independently a C1∼C3 alkyl group; R29 is a C1∼C3 alkyl group, or hydrogen; a is an integral between 10∼50.

Preferably, each R21, R22, R23, R24, R25 and R26 in formula (II) is independently a C1∼C4 alkyl group; each R27 and R28 is independently a C1∼C2 alkyl group; R29 is a C∼C2 alkyl group, or hydrogen; a is an integral between 15~40. In the example of the present invention, hydroxyl-terminated polydimethylsiloxane (PDMS-diol) with 1000∼4000 molecular weight is used as a reactant.

In the second step, Si(OR)4 precursor (A) reacts with hydrophilic reactive monomer (III), in molar ratio of 1: 1~21, to form an hydrophilic silicon-containing prepolymer (B).

Preferably, the molar ratio of Si(OR)4 precursor (A) and hydrophilic reactive monomer (III) to hydrophilic silicon-containing prepolymer (B), is 1: 1~15.

Preferably, the molar ratio of Si(OR)4 precursor (A) and hydrophilic reactive monomer (III) to hydrophilic silicon-containing prepolymer (B), is 1: 3~12.

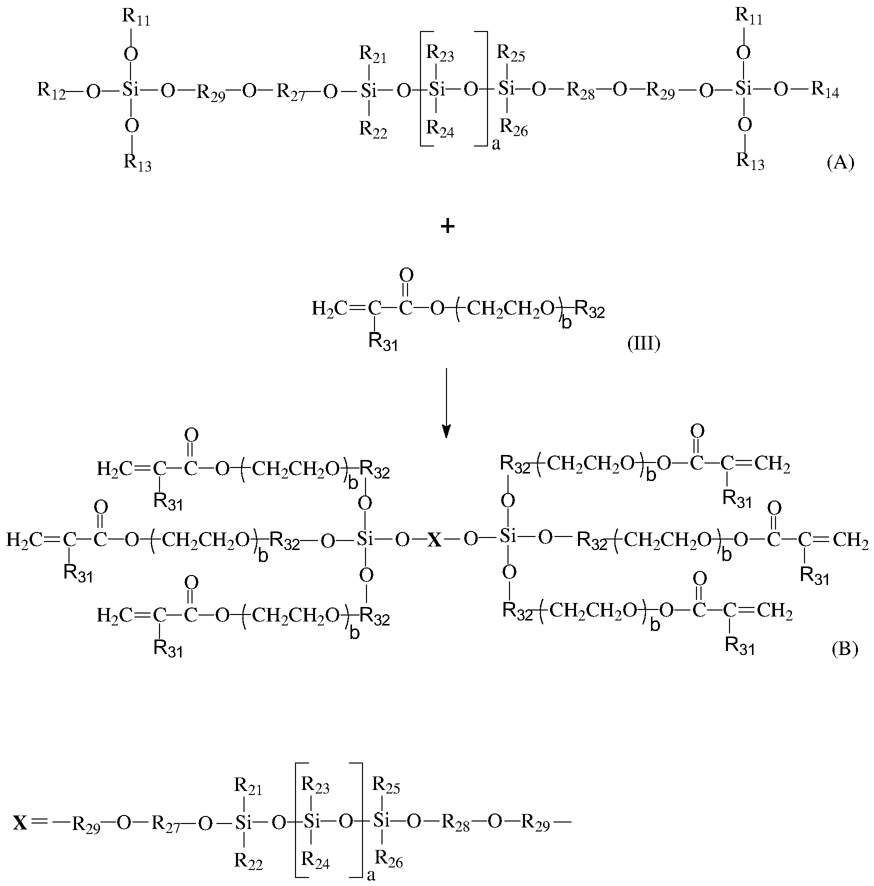

R31 is a C1∼C6 alkyl group; R32 is a C1∼C6 alkyl group, carboxyl group or hydrogen; b is an integral between 1∼30.

Preferably, in formula (III), R31 is a C1∼C5 alkyl group; R32 is a C1∼C5 alkyl group, carboxyl group or hydrogen; b is an integral between 1∼20. Preferably, in formula (III), R31 is a C1∼C4 alkyl group; R32 is a C1∼C4 alkyl group, carboxyl group or hydrogen; b is an integral between 1∼10. In the example of the present invention, hydroxyethyl methacrylate (HEMA) is used as a reactant.

Preferably, hydrolysis-condensation-polymerization reactions are performed between 30°C∼60°C. Preferably, hydrolysis-condensation-polymerization reactions are performed between 40°C∼50°C.

Preferably, hydrolysis-condensation-polymerization reactions are performed for 6∼24 hours. Preferably, hydrolysis-condensation-polymerization reactions are performed for 8∼18 hours.

Above silicon-containing prepolymer can be used for producing a hydrogel. The hydrogel of the present invention is a mixture produced by mixing a silicon-containing prepolymer, hydrophilic monomer and silicon-containing hydrophobic monomer, and performing a free radical copolymerization.

Preferably, the silicon-containing prepolymer is present in an amount between 10 wt% and 50 wt% relative to the total weight of the mixture (i). Preferably, the silicon-containing prepolymer is present in an amount between 20 wt% and 50 wt%. Preferably, the silicon-containing prepolymer is present in an amount between 30 wt% and 45 wt%.

Preferably, the hydrophilic monomer is present in an amount between 10 wt% and 50 wt% relative to the total weight of the mixture (i). Preferably, the hydrophilic monomer is present in an amount between 15 wt% and 45 wt%. Preferably, the hydrophilic monomer is present in an amount between 20 wt% and 35 wt%.

Preferably, the silicon-containing monomer is present in an amount between 10 wt% and 45 wt% relative to the total weight of the mixture (i). Preferably, the silicon-containing monomer is present in an amount between 10 wt% and 35 wt%. Preferably, the silicon-containing monomer is present in an amount between 15 wt% and 35 wt%.

Preferably, the silicon-containing hydrophobic monomer is selected from the group consisting of tris(trimethylsiloxy)silypropyl methacrylate (TRIS), bis(trimethylsiloxy)methylsilylpropyl methacrylate, pentamethyldisiloxanyl methylmethacrylate, tris(trimethylsiloxy)silylpropylmethacryloxyethylcarbamate (TSMC), tris(trimethylsiloxy)silypropyl glycerol methacrylate (SIGMA), and tris(polydimethylsiloxy)silylpropyl methacrylate, or combinations thereof. In the present invention, the silicon-containing hydrophobic monomer used in the example, is tris(trimethylsiloxy)silypropyl methacrylate (TRIS).

Preferably, the hydrophilic monomer is selected from the group consisting of hydroxyethyl methacrylate (HEMA), glycerol methacrylate, methacrylic acid (MAA), N-vinyl prrrrolidone, (NVP), N-isopropylacrylamide, 2-hydroxyethyl acrylate, N,N'-diethylacrylamide, N,N'-dimethylacrylamide (DMA), vinyl acetate, and N-acryloymorpholine, 2-dimethylaminoethyl acrylate, or combinations thereof. In the present invention, the silicon-containing hydrophobic monomers used in the example, are tris(trimethylsiloxy)silypropyl methacrylate (TRIS). In the present invention, the hydrophilic monomers used in the example are hydroxyethyl methacrylate (HEMA), methacrylic acid (MAA) and glycerol methacrylate (GMA).

The mixture (i) further comprises a photoinitiator or a thermal initiator. The photoinitiator and thermal initiator can be any initiator known in the art, e.g. disclosed in US 8,992,118 and US 5,908,906. In the present invention, the photoinitiator used in the example is 2-Hydroxy-2-methyl-1-pentyl-1-propanone.

While using photoinitiator, preferably, the free radical copolymerization is performed between 2 mW/cm2 to 12 mW/cm2. Preferably, the free radical copolymerization is performed between 4 mW/cm2 to 10 mW/cm2.

Firstly, uniformly mix a predetermined ratio of silicon-containing prepolymer, silicon-containing hydrophobic monomer (e.g. TRIS), and hydrophilic monomers (e.g. HEMA, MAA and GMA). Then add isopropyl alcohol as a dispersing agent, and use 2-Hydroxy-2-methyl-1-pentyl-1-propanone as a photoinitiator to perform free radical copolymerization between 5~6 mW/cm2 for one hour to form a silicone hydrogel. Use ethanol-water mixture (mixing ratio: 5/5) as an extraction diluent to perform swelling extraction for 3~4 hours, and incubate in saline solution for 2∼3 hours, to obtain a silicone hydrogel. A contact lens produced by the above silicone hydrogel is also provided. The contact lens can be produced by any known method used in the art, for example: mixing the above silicon-containing prepolymer, silicon-containing hydrophobic monomer and hydrophilic monomer, and pouring the mixture into a case mold having a concave (female mold) so as to form the front surface of the lens. Through rotary heating, the anterior part of the lens can be formed. Alternatively, the anterior part of the lens can be formed by pouring the mixture into another mold, and the treat it with photo- or heating-curing. Said mold consists two parts: one is a female mold used to form front surface of the lens, and the other is a male mold used to form rear surface of the lens.

Embodiments

<Embodiment 1: producing silicon-containing prepolymer>

(1) Mix 0.1 mole TEOS and 0.1 mole PDMS-diol (MW: 3000), in room temperature, to obtain a reaction solution.

(2) Warm the reaction solution to 45°C and add 100µl acetic acid solution, to perform the first hydrolysis-condensation-polymerization for 10 hours.

(3) Slowly add 0.3 mole hydroxyethyl methacrylate (HEMA) into the reaction solution of step (2), and then add 150µl acetic acid solution to perform the second hydrolysis-condensation-polymerization for 10 hours. Add a predetermined amount of isopropyl alcohol into the solution and obtain a dipersing clear transparent solution which comprises the silicon-containing prepolymer of the present invention.

(4) Remove isopropyl alcohol used in step (2) by vacuum condensation under 55°C, and extract the silicon-containing prepolymer by hexane. Then remove hexane by vacuum condensation to obtain pure silicon-containing prepolymer.

<Embodiments 2∼8>

Silicon-containing prepolymers in embodiments 2∼8 (as shown in table 1) are produced with similar steps as embodiment 1. However, reactants and the amount of acetic acid solution used herein are different.

**Table 1**

| | tetraalkoxysilane | hydroxyl-terminated | Hydrophilic reactive monomer | Acetic acid | Acetic acid |
|---|---|---|---|---|---|
| | | polydimethylsiloxane | | | |
| | TEOS | PDMS-diol | HEMA | Acetic | Acetic |
| | (mol) | (mol) | (mol) | acid | acid |
| | | | | (µl) | (µl) |
| | | | | in | in |
| | | | | step | step |
| | | | | (2) | (3) |
| Embodiment 1 | 0.1 | 0.1 | 0.6 | 100 | 150 |
| Embodiment 2 | 0.2 | 0.1 | 0.6 | 100 | 150 |
| Embodiment 3 | 0.3 | 0.1 | 0.6 | 120 | 180 |
| Embodiment 4 | 0.4 | 0.1 | 0.6 | 120 | 180 |
| Embodiment 5 | 0.1 | 0.1 | 1.2 | 100 | 200 |
| Embodiment 6 | 0.2 | 0.1 | 1.2 | 100 | 200 |
| Embodiment 7 | 0.3 | 0.1 | 1.2 | 120 | 250 |
| Embodiment 8 | 0.4 | 0.1 | 1.2 | 120 | 250 |

### Examplary examples

### <example 1: silicone hydrogel contact lens production>

(1) Uniformly mix the silicon-containing prepolymer, silicon-containing hydrophobic monomer (e.g. TRIS), and hydrophilic monomers (HEMA, MAA and GMA) to obtain a mixture, wherein the ratio of silicon-containing prepolymer, TRIS, and hydrophilic monomers (HEMA, MAA and GMA) is 30 wt%, 30 wt% and 40 wt%, respectively, and hydrophilic monomers comprises HEMA, MAA and GMA, in a weight ratio of 20/10/10.

(2) Add 2-Hydroxy-2-methyl-1-pentyl-1-propanone (CIBA; cat no. D1173) into mixture of step (1).

(3) Provide nitrogen gas to pass through the mixture of step (2) for 15 min so as to remove oxygen in solution. Pour the mixture 3 into a glass mold. The glass mold is assembled by two glasses 2 which are separated by two spacers 1, and clipped by long-tail clips. As shown in Fig. 1, perform a photoinitiation with an illumination between 6mW/cm², in a distance from light source of 12 cm, for 1 hr, so as to form silicone hydrogel.

(4) Incubate the silicone hydrogel of step (3) in heater, 60°C, 30 min, for heat curing. Use ethanol-water mixture (mixing ratio: 5/5) as an extraction diluent to perform swelling extraction for 3∼4 hours, and incubate in saline solution for 2∼3 hours, to obtain a silicone hydrogel.

(5) Sterilize the silicone hydrogel of step (3) under 121°C, 30 min, to obtain a silicone hydrogel test piece.

### <examples 2∼12 >

Silicon-containing hydrogel test pieces in examples 2∼12 (as shown in table 2) are produced with similar steps as example 1. However, the amount of reactants used herein is different.

**Table 2**

| | silicon-containing prepolymer | silicon-containing hydrophobic monomer | hydrophilic monomer | Photoinitiator |
|---|---|---|---|---|
| | Mixture B (wt%) | TRIS (wt%) | HEMA/MAA/GMA (wt%) | D1173 (wt%) |
| Example 1 | Embodiment 1(30) | 30 | 10/20/10 | 0.5-1.5 |
| Example 2 | Embodiment 1(30) | 30 | 15/15/10 | 0.5-1.5 |
| Example 3 | Embodiment 1(30) | 30 | 20/10/10 | 0.5-1.5 |
| Example 4 | Embodiment 3(30) | 30 | 10/20/10 | 0.5-1.5 |
| Example 5 | Embodiment 3(30) | 30 | 15/15/10 | 0.5-1.5 |
| Example 6 | Embodiment 3(30) | 30 | 20/10/10 | 0.5-1.5 |
| Example 7 | Embodiment 5(30) | 30 | 10/20/10 | 0.5-1.5 |
| Example 8 | Embodiment 5(30) | 30 | 15/15/10 | 0.5-1.5 |
| Example 9 | Embodiment 5(30) | 30 | 20/10/10 | 0.5-1.5 |
| Example 10 | Embodiment 7(30) | 30 | 10/20/10 | 0.5-1.5 |
| Example 11 | Embodiment 7(30) | 30 | 15/15/10 | 0.5-1.5 |
| Example 12 | Embodiment 7(30) | 30 | 20/10/10 | 0.5-1.5 |

### <Contact angle, moisture content, oxygen permeability, and mechanical strength tests >

Tested pieces of examples 1∼12 are assayed their contact angle, moisture content, oxygen permeability, and mechanical strength tests, wherein the contact angle test is performed according to traditional sessile drop method; moisture content test is performed according to ISO standard 10399; mechanical strength test (elongation and modulus of elasticity) is performed according to ASTM D1780.

Presently the contact angle suitable for contact lens production is between 10° to 90°. As shown in table 3, surface contact angle of silicone hydrogel of the present invention is between 40° to 60°, such that it has excellent surface wettability and is suitable for contact lenses. Its moisture content is between 30% to 55%, and oxygen permeability (Dk) is between 50 to 80 barrers (Dk =10-11 (cm³ O₂) cm cm⁻² s⁻¹ mmHg⁻¹, barrer). In comparison with HEMA contact lenses, the oxygen permeability of the present invention is significantly elevated. According to table 3, elongation of silicone hydrogel tested piece of the present invention is larger than 100%. It means the silicone hydrogel has no low-elongation problem and not tends to break while expanding. Modulus of elasticity is below 1 MPa, such that it has outstanding wearing comfort.

**Table 3**

| | contact angle (°) | moisture content (wt%) | oxygen permeability (Dk) | elongation (%) | modulus of elasticity (MPa) |
|---|---|---|---|---|---|
| example 1 | 60±4 | 33.2±1.3 | 77.3±6.4 | 187±18 | 0.689±0.041 |
| example 2 | 56±4 | 39.5±1.5 | 71.8±5.2 | 165±11 | 0.931±0.069 |
| example 3 | 51±3 | 44.1±1.6 | 65.3±3.2 | 161±11 | 0.873±0.055 |
| example 4 | 60±4 | 32.9±1.1 | 77.9±6.6 | 176±15 | 0.756±0.048 |
| example 5 | 55±4 | 40.6±1.2 | 70.1±5.3 | 181±19 | 0.701±0.044 |
| example 6 | 50±4 | 43.8±1.8 | 68.3±5.1 | 156±13 | 0.913±0.067 |
| example 7 | 58±4 | 43.9±1.5 | 65.4±5.1 | 197±21 | 0.612±0.035 |
| example 8 | 51±3 | 48.8±1.5 | 57.1±4.6 | 192±20 | 0.637±0.038 |
| example 9 | 45±2 | 51.0±1.9 | 52.3±4.2 | 174±17 | 0.811±0.052 |
| example 10 | 58±3 | 46.1±1.6 | 61.7±4.9 | 213±25 | 0.513±0.028 |
| example 11 | 49±2 | 51.5±1.9 | 55.2±4.3 | 201±22 | 0.559±0.031 |
| example 12 | 42±2 | 54.3±2.1 | 50.2±4.1 | 182±19 | 0.821±0.052 |

Although the present invention has been described with reference to the preferred embodiments thereof, it is apparent to those skilled in the art that a variety of modifications and changes may be made without departing from the scope of the present invention which is intended to be defined by the appended claims.

## Claims

1. A silicon-containing prepolymer, produced by the following compounds with a predetermined concentration, through hydrolysis-condensation-polymerization reactions, comprising:
a tetraalkoxysilane as represented by formula (I): 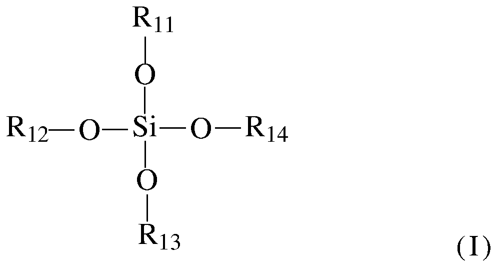 wherein each R₁₁, R₁₂, R₁₃, and R₁₄ is independently a C1∼C8 alkyl group;
a hydroxyl-terminated polydimethylsiloxane as represented by formula (II): 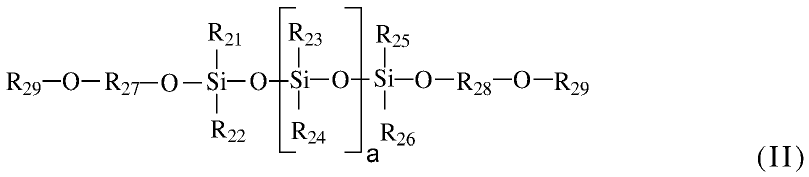 wherein each R₂₁, R₂₂, R₂₃, R₂₄, R₂₅ and R₂₆ is independently a C1∼C6 alkyl group; each R₂₇ and R₂₈ is independently a C1∼C4 alkyl group; R₂₉ is a C1∼C4 alkyl group, or hydrogen; a is an integral between 1∼60;
a hydrophilic reactive monomer as represented by formula (III): 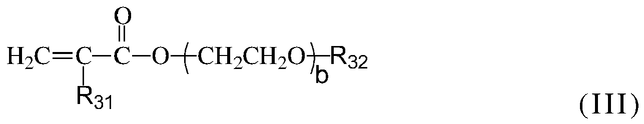 R₃₁ is a C1∼C6 alkyl group; R₃₂ is a C1∼C6 alkyl group, carboxyl group or hydrogen; b is an integral between 1~30.

2. The silicon-containing prepolymer of claim 1, wherein the predetermined concentration is molar concentration, the ratio of tetraalkoxysilane:
hydroxyl-terminated polydimethylsiloxane: hydrophilic reactive monomer is 1∼20:1:1-21.

3. The silicon-containing prepolymer of claim 2, wherein the predetermined concentration is molar concentration, the ratio of tetraalkoxysilane:
hydroxyl-terminated polydimethylsiloxane: hydrophilic reactive monomer is 4∼14: 1: 3∼12.

4. The silicon-containing prepolymer of claim 1, wherein the molar weight of hydroxyl-terminated polydimethylsiloxane is between 1,000~4,000.

5. The silicon-containing prepolymer of claim 1, wherein tetraalkoxysilane is tetraethyl orthosilieate (TEOS).

6. The silicon-containing prepolymer of claim 1, wherein hydrophilic reactive monomer is hydroxyethyl methacrylate (HEMA).

7. A use of the silicon-containing prepolymer of any one of claims 1-6 for manufacturing a silicon-containing hydrogel.

8. A silicon-containing hydrogel, being a mixture (i), produced by mixing the following compounds and performing a free radical copolymerization, the comounds comprising:
a silicon-containing prepolymer of claims 1~6;
a hydrophilic monomer; and
a silicon-containing hydrophobic monomer.

9. The silicon-containing hydrogel of claim 8, wherein the silicon-containing prepolymer is present in an amount between 10 wt% and 50 wt% relative to the total weight of the mixture (i).

10. The silicon-containing hydrogel of claim 8, wherein the hydrophilic monomer is present in an amount between 30 wt% and 45 wt% relative to the total weight of the mixture (i).

11. The silicon-containing hydrogel of claim 10, wherein the hydrophilic monomer is present in an amount between 20 wt% and 35 wt% relative to the total weight of the mixture (i).

12. The silicon-containing hydrogel of claim 8, wherein the silicon-containing hydrophobic monomer is present in an amount between 10 wt% and 45 wt% relative to the total weight of the mixture (i).

13. The silicon-containing hydrogel of claim 12, wherein the silicon-containing hydrophobic monomer is present in an amount between 15 wt% and 35 wt% relative to the total weight of the mixture (i).

14. The silicon-containing hydrogel of claim 8 wherein the silicon-containing hydrophobic monomer is selected from the group consisting of tris(trimethylsiloxy)silypropyl methacrylate (TRIS), bis(trimethylsiloxy)methylsilylpropyl methacrylate, pentamethyldisiloxanyl methylmethacrylate, tris(trimethylsiloxy)silylpropylmethacryloxyethylcarbamate (TSMC), tris(trimethylsiloxy)silypropyl glycerol methacrylate (SIGMA), and tris(polydimethylsiloxy)silylpropyl methacrylate, or combinations thereof.

15. The silicon-containing hydrogel of claim 14, wherein the silicon-containing hydrophobic monomer is tris(trimethylsiloxy)silypropyl methacrylate (TRIS).

16. The silicon-containing hydrogel of claim 8, wherein the hydrophilic monomer is selected from the group consisting of hydroxyethyl methacrylate (HEMA), glycerol methacrylate, methacrylic acid (MAA), N-vinyl prrrrolidone, (NVP), N-isopropylacrylamide, 2-hydroxyethyl acrylate, N,N'-diethylacrylamide, N,N'-dimethylacrylamide (DMA), vinyl acetate, and N-acryloymorpholine, 2-dimethylaminoethyl acrylate, or combinations thereof.

17. The silicon-containing hydrogel of claim 16, wherein the hydrophilic monomer is selected from the group consisting of hydroxyethyl methacrylate (HEMA), glycerol methacrylate, and methacrylic acid (MAA).

18. The silicon-containing hydrogel of claim 8, further comprising a photoinitiator or a thermal initiator.

19. A contact lens, manufactured by the comprsing silicon-containing hydrogel of claims 7, 8 and 18.
